# EUROPEAN PATENT APPLICATION

(11) **EP 3 216 774 A1**
(43) Date of publication of application: **13.09.2017**
(21) Application number: 16160012.7
(22) Date of filing: 11.03.2016
(51) Int. Cl.: C04B 41/00

(54) **A LAMINATED TILE AND A METHOD FOR MANUFACTURING SAME**

(71) Applicant: MBI Group B.V., 5466 AE Veghel (NL)
(72) Inventor: BETTONVIL, Marcelis Martinus Johannes, 5466 AE Veghel (NL); MOLLINK, Wilhelmus Antonius Gerardes, 5466 AE Veghel (NL)
(74) Representative: Plaggenborg, Menko Bernard

(57) **Abstract**

The present invention relates to a laminated tile, comprising a mutually connected solid tile body and concrete body. In the laminated tile, the concrete body has an open structure.

The invention also relates to a method for manufacturing a 5laminated tile according to any of the preceding claims. The method comprises the steps of: - applying an adhesive to a first surface of said solid tile body, - applying a concrete mixture on top of said solid tile's first surface, said concrete having an open structure, and - hardening said concrete mixture and said 10adhesive for obtaining a laminated tile.

## Description

The present invention relates to a laminated tile and a method for manufacturing a laminated tile. The invention also relates to a method of manufacturing same.

The laminated tile is comprised of a solid tile body at a visible side, and a concrete body at a non-visible side. The non-visible side will, during use, be positioned on a ground, for example sand. The solid tile body may be a ceramic body, or a solid body of any other material that is suitable for use as a top layer of a laminated tile. The laminated tile according to the present invention is mainly used for garden and terrace applications but not limited thereto.

To a limited extent, the application of ceramic tiles in gardens and on terraces is known in the art. However, these known ceramic tiles do not withstand common handling in outdoor applications. It has shown that ceramic tiles suffer from fracture and deterioration when used outdoors. Also, it is hard to build a flat terrace with a sufficient stable base layer so as to prevent the ceramic tiles from breaking. As a consequence, for outdoor use these known ceramic tiles are not available on the market in a large scale.

Theoretically, laminated tiles as indicated above have excellent properties, because of a combination of highly attractive appearance due to the ceramic tile and high strength due to the concrete body. However, these laminated tiles often deteriorate in wet and cold conditions, since the adhesive at the boundary layer between the solid tile body, for example a ceramic tile, and the concrete base layer, is damaged. It is proposed to fully protect this boundary layer against moisture, such that freezing conditions do not influence said adhesion, but then still the adhesive layer releases.

As a consequence, there is a need for an improved laminated tile as well as for a manufacturing method for laminated tiles. For example, the invention is directed but certainly not limited to laminated tiles that are comprised of a ceramic upper layer and a concrete body. Therefore, where there is mention of ceramic tiles, all other kinds of solid tile bodies that are suitable for application in the resent invention are meant as well.

The invention aims at providing an improved laminated tile, obtained from a solid tile body and a concrete body.

The invention also aims at providing a manufacturing method for a laminated tile, also indicated as sandwich tile, comprised of a solid tile body and a concrete body. According to the present invention, the term "laminated tile" or "sandwich tile" relates to the product obtained with the method according to the present invention, whereas the term "solid tile body" relates to a "ceramic tile" or a solid tile body of any other suitable material that embodies the solid tile body in the "laminated tile" according to the present invention.

The invention especially aims at providing a laminated tile that has an optimum adhesion strength between the solid tile body and concrete body.

So as to obtain at least one of the goals mentioned above, the present invention provides a method comprising the steps of claim 1. This tile provides the advantage that an excellent adhesion strength is obtained between the solid tile body and the concrete body.

The invention therefore relates to a laminated tile, comprising a mutually connected solid tile body and concrete body, said tile being characterized in that said concrete body has an open structure. It has unexpectedly shown that the laminated tile according to the present invention is substantially completely resistant to moisture and temperature fluctuations. For, in the art it was considered essential that no moisture at all would be allowed to reach the adhesive on the boundary between the concrete body and the slid tile body. In the present invention, moisture has no detrimental effect at all. According to the present invention, the concrete body has an open structure allowing water to flow through said structure.

Preferred embodiments of the present invention will be discussed hereafter.

It is especially preferred for the concrete body to be porous with open cells. In that case, as is the case with a concrete with an open structure, the adhesive can easily penetrate at least part of the open structure so as to obtain an optimum adhesion. In such case, there is no strict boundary layer between the concrete body and the solid tile body but a boundary range partly extending into the concrete body.

So as to improve the adhesive strength of the laminated tile, it is preferred for the laminated tile that said concrete body and said solid tile body are mutually connected by an elastic adhesive. For, when hardening the concrete it will shrink to some extent, introducing stresses in the adhesive if said adhesive would be fully set. An adhesive that has at least some elasticity will be able to absorb at least part of this shrinking stress. As a consequence, temperature induced stresses due to different shrinking coefficients of the concrete body and the solid tile body, will not cause a complete failure of the connection between concrete body and solid tile body.

As mentioned above, it is especially preferred that the adhesive for connecting said solid tile body and said concrete body at least partially enters the concrete's open structure.

A thorough invasion of the open structure by said adhesive may be preferably obtained by a foaming adhesive. Thus, it is preferred that said concrete body and said solid tile body being mutually connected by an adhesive, wherein said adhesive comprises a foamed polymer.

Most preferably, an excellent adhesion is obtained by an adhesive being a polymerization product of a di-isocyanate, preferably polyurethane.

According to a further aspect, the invention relates to a method for manufacturing a laminated tile according to any of the preceding claims, comprising the steps of: - applying an adhesive to a first surface of said solid tile body, - applying a concrete mixture on top of said solid tile's first surface, said concrete having an open structure, and - hardening said concrete mixture and said adhesive for obtaining a laminated tile. Such method provides a tile that has the advantages of the laminated tile according to the present invention as mentioned above.

Analogous to the laminated tile according to the invention it is preferred in the method to comprise a step of compacting said concrete after applying same to the mold, retaining the concrete's open structure. Such yields an optimum combined action of the adhesive and the concrete with the open structure.

Such preferred embodiment is especially obtained by using an adhesive being a polyurethane polymer.

So as to retain the open structure during hardening the concrete, it is preferred that said concrete is a non-liquid concrete mixture.

Hereafter, reference will be made mainly to "ceramic tile", whereas other kinds of solid tile bodies are meant as well. For example, a solid tile body may be chosen from ceramics, natural stone, metal such as zinc, aluminum, stainless steel and corten steel, plastics, rubber, wood, and glass, without limitation.

It has shown that a method comprising the step of compacting said concrete after applying same to the mold increases the structural integrity of the laminated tile according to the invention. However, it has unexpectedly shown that the adherence of the concrete and the ceramic tile is improved as well by this method step.

Applying a concrete with an open structure unexpectedly increases the durability of the tile, probably due to improved drain characteristics of the laminated tile.

A highly preferred method is comprised of the steps of compacting, or densifying, said concrete mixture before same is hardened, applying a pressure of at least 2 bar, preferably at least 2.5 bar, and preferably maximally 8 bar, also preferably in combination with a vibration movement of said concrete. It is, however, very important that the open structure of the concrete is retained. Preferably, said step of densifying the concrete mixture is as short as possible while obtaining a maximally densified mixture, for example only a few seconds. However, when applying the pressure as mentioned above, said step is preferably performed for maximally 30 seconds, preferably maximally 20 seconds, more preferably maximally 10 seconds. This produces a highly stable and durable laminated tile.

So as to ensure that any concrete mixture does not enter any gaps between the ceramic tile and the mold's side walls, which might pollute the ceramic tile's top surface, it is preferred that the method comprises the step of applying a non-liquid concrete mixture. The term "non-liquid" means that the concrete mixture has such a consistency that within the time required for setting or hardening out, it does not substantially change its shape without active outside interference. Such behavior is also known by the term "non-flowing characteristics". A man skilled in the art of concrete technology is easily able to determine what concrete mixture fulfils such requirement. Surprisingly, it has shown that applying such non-liquid mixture provides a sufficient bonding between the concrete body and the ceramic tile. With reference to knowledge according to the state of the art, it was expected that an optimum bonding could only be obtained by applying a liquid mixture so as to obtain a maximum wetting of the ceramic tile's surface. It was even more surprising that the non-liquid mixture yields a remarkable, even sensational, ability to withstand temperature fluctuations and winter conditions. Applying a concrete mixture with an open character improves these characteristics even further.

Hereafter, the invention will be discussed with reference to a manufacturing method.

According to the method of the present invention, a ceramic tile is provide with an adhesive, hereafter indicated as primer. Said primer is applied at the side to which a concrete mass will be added. Hence, the primer will be added to the bottom side of the ceramic tile. The side not provided with primer is the, when in use, visible or top side of the ceramic tile. Said primer should be capable of providing a coupling of a ceramic material and a (solid) concrete mass. Said primer may be applied manually or automatically, for example by means of spraying, rolling, or any other suitable means.

The ceramic tile is then positioned in a mold. The ceramic tile's bottom side is facing upwards whereas said top side is facing the bottom of the mold, said mold preferably being provided with a cushioning material so as to not damage the ceramic tile's top side. For example, a rubber material may be used, such as a polyurethane material or any kind of foamed rubber or rubber like material. It is preferred that said ceramic tile is evenly supported at its full top surface by said cushioning material.

The ceramic tile should closely fit inside said mold. As a matter of fact, the side walls of said mold may be provided with a compressible material so as to ensure that said ceramic tile is closely sealed at all edges, but a close fitting of side walls of the mold may provide good results as well. In such case, the mold may be comprised of a rigid, dimensionally stable material.

Preferably, the laminated tile's side walls are at least at part of their circumference somewhat wider than the dimension of the ceramic tile. This ensures that the concrete body of the laminated tile protrudes at least partly beyond the side edges of the ceramic tile. Preferably, the concrete body protrudes at least partly beyond all edges of said ceramic tile. Such yields a laminated tile that can be easily laid side by side without damaging the ceramic layer. The concrete bodies of adjacent tiles contact each other at said protruding portion, whereas the ceramic tiles are spaced apart. This also provides room for a pointing mortar or the like between adjacent tiles.

Said protrusions may preferably be comprised of spacers at at least one side wall of a concrete body, preferably at at least two or even three side walls, more preferably at all side walls of said concrete body. Although a single protrusion, also identified as spacer, may be applied, it is preferred that at least two spacers are provided since such eases laying the tiles. Therefore it is preferred that each tile is provided with spacers at at least two portions of each side wall of a concrete body. As a consequence, it is preferred that the mold is embodied for providing spacers at the side edges of the concrete body. To this end, the mold may comprise at least one, preferably at least two, cavities at its side walls.

Hence, the invention also relates to a laminated tile according to the present invention, comprising a spacer at a side wall of said concrete body extending outside a circumference of said ceramic tile. In addition to the fact that an attractive appearance is obtained since all laminated tiles, more in particular the visible ceramic tiles, are spaced equally, an optimum water drainage is obtained. A spacer protruding maximally 5 mm is sufficient, whereas a maximum of 3.5 mm or even 2.5 mm yields excellent results, both in water drainage and appearance.

After placing the solid tile body in the mold, a concrete material is added on said ceramic tile's bottom side, which, as mentioned above, is facing upwards inside said mold. For example, said concrete may be added so as to obtain a concrete layer of between 1 and 12 cm, preferably between 3 and 8 cm.

Subsequently, said concrete is compressed (also: compacted or densified) before it is hardened, however with the proviso that the concrete mixture's open structure is preserved. Said compression may be comprised of a common compression step as used in practice.

A highly preferred method is comprised of the steps of densifying said concrete mixture before same is hardened, applying a pressure of at least 2 bar, preferably at least 2.5 bar, and maximally 8 bar, preferably in combination with a vibration movement of said concrete. Preferably, said step of densifying the concrete mixture is as short as possible while obtaining a maximally densified mixture, for example only a few seconds, like at least 3 seconds. However, when applying the pressure as mentioned above, said step is preferably performed for maximally 30 seconds, preferably maximally 20 seconds, more preferably maximally 15 seconds. This produces a highly stable and durable laminated tile, wherein the concrete mixture's open structure is preserved.

Said concrete mass preferably comprises aggregates. Positive results were obtained when using aggregates chosen from at least one of sand, granulate, cement and blast furnace slag flour (which is finely ground blast furnace slag). A combination of two or three of these aggregates provides better results, whereas best results were obtained when using all four of these aggregates.

In the method, said sand has an average particle dimension of maximally 4 mm, and said granulate has an average particle dimension of between 2 and 8 mm. Said cement has an average particle size as commonly used. The blast furnace slag flour may be used as a complete or partly substitute for said cement and may have the same dimension as cement. Use of blast furnace slag flour as a full or partial substitute for cement (preferably about 25 - 50%, more preferably about 33% slag flour) has as advantage that curing (or hardening) of the concrete mixture is substantially slower than when using cement only (for example Portland cement). Dimensions of the aggregates may be as is common in the art. This counts both for a case where only one or a limited number of aggregates is used and in the case where all four aggregates are used.

A lightweight concrete product may be obtained by means of the method according to the invention as well. For example, an advantageous product is obtained by applying as a (course) granulate so-called Liapor in a first dimension range of from 2 to 4 mm and in a second dimension range of from 4 to 8 mm. Optionally, Liapor may be replaced by so-called Lava granulate in a first dimension range of from 2 to 4 mm and in a second dimension range of from 4 to 8 mm.

Especially optimum results are obtained when applying a concrete mixture comprising sand in an amount of between 15 and 30%, preferably between 20 and 25%; comprising said granulate in an amount of between 55 and 75%, preferably between 62 and 69%; comprising said cement in an amount of between 4 and 12%, preferably between 6 and 10%; and comprising said blast furnace slag in an amount of between 2 and 6%, preferably between 3 and 5%; all % calculated on weight basis. Such combination of materials yields a laminated tile that has an excellent bonding between said ceramic tile and said concrete mass and an extremely high durability.

In the manufacturing methods when testing the concrete composition, said sand has an average particle size of maximally 4 mm, said granulate has an average particle size of between 2 and 8 mm. Said cement has an average particle size as commonly used; the same applies to the average particle size of said blast furnace slag.

Cement is preferably Portland cement 52.2N, although other kinds of cement may be used as well.

The respective ratios of the contents of the concrete must be such that a concrete with an open structure is obtained.

After at least partially hardening said concrete so as to obtain a green hardness, which means that said concrete will remain its shape when and after being removed from said mold, the laminated tile is removed from the mold and left to harden. It may be placed inside a climate chamber at a predetermined temperature and humidity. Such climate treatment may last for, for example, 24 hours. The tile is positioned with its concrete layer top side when hardening same, for example inside said climate chamber. The adhesive may also fully harden during this process, if applicable.

After hardening said concrete, the laminated tile is transported to a packaging station and stacked, wherein a cushioning protection layer is placed in between every laminated tile in said stack so as to ensure the tiles are not damaged. When said concrete is sufficiently, preferably fully, hardened said laminated tile may be stacked with its ceramic side on top.

## Claims

1. A laminated tile, comprising a mutually connected solid tile body and concrete body, **characterized in that** said concrete body has an open structure.

2. A laminated tile according to claim 1, wherein said concrete body is porous with open cells.

3. A laminated tile according to claim 1, wherein said concrete body and said solid tile body are mutually connected by an elastic adhesive.

4. A laminated tile according to claim 1, wherein an adhesive for connecting said solid tile body and said concrete body at least partially enters the concrete's open structure.

5. A laminated tile according to claim 1, said concrete body and said solid tile body being mutually connected by an adhesive, wherein said adhesive comprises a foamed polymer.

6. A laminated tile according to claim 1, wherein said adhesive is a polymerization product of a di-isocyanate, preferably a polyurethane.

7. A method for manufacturing a laminated tile according to any of the preceding claims, comprising the steps of:
- applying an adhesive to a first surface of said solid tile body,
- applying a concrete mixture on top of said solid tile's first surface, said concrete having an open structure,
- hardening said concrete mixture and said adhesive for obtaining a laminated tile.

8. A method according to claim 7, comprising the step of compacting said concrete after applying same to the mold, retaining the concrete's open structure.

9. A method according to any of claims 7, wherein said adhesive is a polyurethane polymer.

10. A method according to claim 7, wherein said concrete is a non-liquid concrete mixture.
